Europäisches Patentamt

European Patent Office

Office européen des brevets

(19)

(11) Veröffentlichungsnummer: **0 474 007 A2**

(12) **EUROPÄISCHE PATENTANMELDUNG**

| | |
|---|---|
| (21) Anmeldenummer: **91113836.0** | (51) Int. Cl.⁵: **F02B 37/02**, F02B 37/12 |
| (22) Anmeldetag: **19.08.91** | |

(30) Priorität: **06.09.90 DE 4028263**

(43) Veröffentlichungstag der Anmeldung:
**11.03.92 Patentblatt 92/11**

(84) Benannte Vertragsstaaten:
**DE DK FR GB IT NL**

(71) Anmelder: **Krupp MaK Maschinenbau GmbH
Falckensteiner Strasse 2-4**
**W-2300 Kiel 17(DE)**

(72) Erfinder: **Heintze, Wolfgang
Lärchengrund 3
W-2300 Kronshagen(DE)**

(74) Vertreter: **Hansmann, Dierk, Dipl.-Ing.
Jessenstrasse 4
W-2000 Hamburg 50(DE)**

(54) **Hochlaufeinrichtung für einen Abgasturbolader eines Dieselmotors.**

(57) Die Hochlaufeinrichtung für einen Abgasturbolader erfolgt durch alternative Zuführung von Dampf oder Druckluft zur Turbine. Hierbei wird die Trennung eines inneren und äußeren Zuführkanals ausgenutzt, wobei während des Betriebes der Hochlaufeinrichtung ein zugeordneter Steuerschieber den inneren Zuführkanal abtrennt und zur Zuführung des Druckmediums benutzt wird. Durch diese Ausbildung wird die Turbine über das zugeführte Druckmedium bei Motorleerlauf auf eine hohe Drehzahl gebracht so daß der Motor eine volle Füllung aufweist und dadurch ein Motordrehmoment abgibt.

FIG. 1

EP 0 474 007 A2

Die Erfindung bezieht sich auf eine Hochlaufeinrichtung für einen Abgasturbolader eines Dieselmotors, mit einer Laderturbine und einem vorgeschalteten rohrförmigen Steuerschieber, wobei ein Gaszuführungsgehäuse der Laderturbine in einen inneren Gaszuführkanal und einen äußeren Gaszuführkanal getrennt ist, die von dem Steuerschieber gasdicht trennbar ist.

Es sind Turbolader für Dieselmotoren bekannt, die mit den bei der Verbrennung entstehenden Abgasen des Motors, beispielsweise lastabhängig betrieben werden (DE-PS 37 15 729), um eine Erhöhung der Füllung und somit eine Leistungssteigerung des Motors zu erzielen. Desweiteren sind Turbolader bekannt geworden, bei denen durch eine Fremdaufladung eine Erhöhung des Ladedrucks und der Fördermenge erzielt wird, indem der Verdichter des Laders über einen Hilfsmotor angetrieben wird. Ausbildung dieser Art sind relativ bauaufwendig.

Diese bekannten Turbolader sind entweder nur mit einem aufwendigen und zusätzlich hierzu benötigten Hilfsantrieb zu betreiben oder es wird die zum Antrieb des Verdichters erforderliche Energie den Abgasen entnommen, soweit der Motor beispielsweise im Leerlauf diese Energie aufbringen kann. Im Stillstand des Motors ist dies aber nicht möglich, so daß dann aufwendige Hilfsantriebe durch einen zusätzlich betriebenen Motor angetrieben werden.

Aufgabe der Erfindung ist es, eine Hochlaufeinrichtung für einen Turbolader eines Dieselmotors der gattungsgemäßen Art zu schaffen, der eine maximale Drehzahl der Turbine bei einer Leerlauf- bzw. Stillstandsstellung des Motors über eine zusätzliche Energiequelle auf einfache Weise gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die hauptsächlich erzielten Vorteile bestehen darin, daß die vorliegenden baulichen Verhältnisse für eine Hochlaufeinrichtung ausnutzbar sind. Hierbei wird durch den Steuerschieber ermöglicht, daß eine Trennung zum Abgassystem des Motors während der Hochlaufphase gewährleistet ist. Weiterhin ist eine kleine Fläche der Laderturbine zur Aufrechterhaltung des erforderlichen Gegendrucks ausnutzbar und der Verdichter wird durch diese Anordnung nicht instabil.

Ein Ausführungsbeispiel der Erfindung mit alternativen Druck-/Dampfbetrieb der Hochlaufeinrichtung ist in den Zeichnungen schematisch dargestellt. Es zeigen:

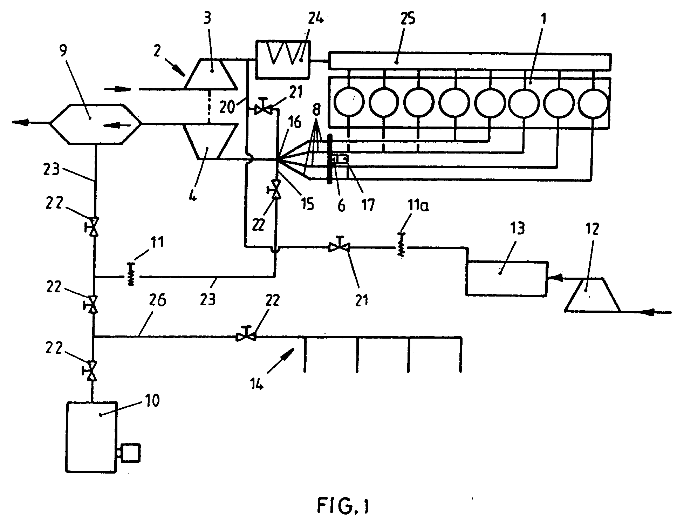

Fig. 1:    ein Blockschnittbild einer Einrichtung,

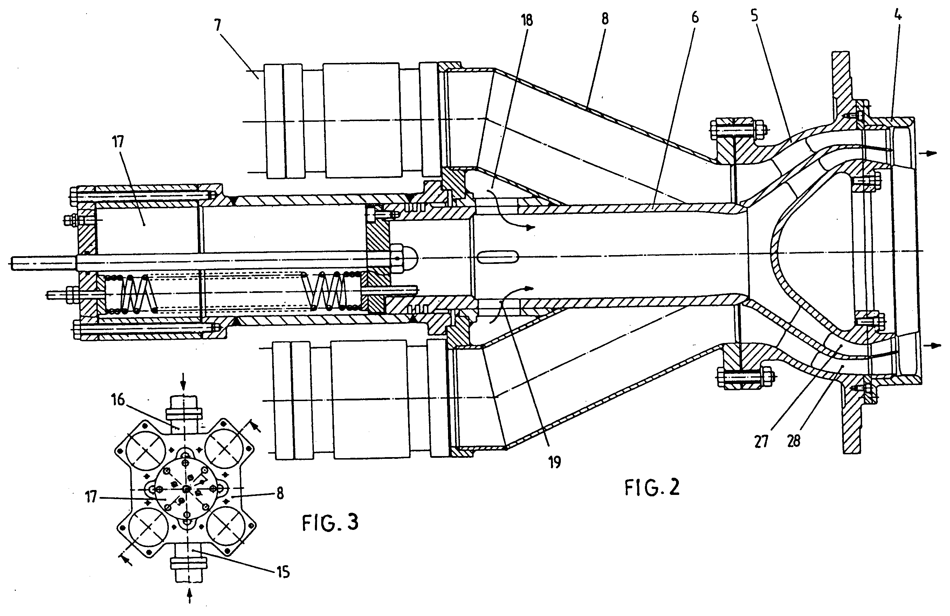

Fig. 2:    eine Schnittdarstellung eines Abgaszuführgehäuses zur Turbine mit Steuerschieber und Abgasleitungssystem,
Fig. 3:    einen Schnitt durch das Konvertergehäuse.

Die dargestellte Hochlaufeinrichtung ist für eine Anordnung vorgesehen, die im wesentlichen aus einem Turbolader 2 mit einem Verdichter 3 und einer auf gleicher Welle angeordneten Turbine 4 besteht, die über Abgase des Dieselmotors 1 antreibbar ist. Zwischen den Abgasrohren 7, die über einen Abgaskonverter 8 zusammengeführt sind, und dem Turbolader 2 ist stromab ein rohrförmiger Steuerschieber 6 mit einem steuerbaren Antrieb 17 angeordnet, der ein Zuführen der Abgase über ein Abgaszuführgehäuse 5 zur Turbine 4 entsprechend den gewünschten Erfordernisse der Aufladung zuläßt. Hierzu ist das Abgaszuführgehäuse 5 zur Turbine 4 mit einem inneren und äußeren Zuführkanal 27, 28 versehen, wobei der Steuerschieber 6 in der einen Endstellung den inneren Zuführkanal 27 abtrennt.

Die dargestellte Hochlaufeinrichtung ist vorzugsweise für Schiffe einsetzbar, wobei ein Abgaskessel 9 mit einem Hilfskessel 10 über Leitungen 23 verbunden und zum Antrieb der Turbine 4 des Turboladers 2 vorgesehen ist, daß ein Dampfnetz 14 der Wärmeenergieversorgungseinrichtung anschließbar ist und über die Leitungen 26, 23 Dampf zugeführt wird. In der Leitung 23 sind ein Druckminderer 11 und Absperrventile 22 angeordnet.

Durch die zugeführte Energie aus dem Dampf kann der Turbolader 2 im Vorwege bei stehendem oder auch bei leerlaufendem Motor 1 soweit hochgefahren werden, daß beim Motorstart dann sofort die volle Füllung verarbeitet wird und ein Motordrehmoment zur Verfügung steht. In dieser Betriebsphase schließt der Steuerschieber 6 den inneren Zuführkanal 27 im Abgaszuführgehäuse 2 ab, so daß eine Trennung zum Abgassystem erfolgt.

Beim alternativen Betrieb der Hochlaufeinrichtung mit Druckluft ist in eine Leitung 20 des Verdichters 3 des Turboladers 2 stromab ein Ladeluftkühler 24 angeordnet, der mit einem Ladeluftaufnehmer 25 des Motors 1 verbunden ist. Eine Umluftleitung 20 verbindet dabei den Ladekühler 24 mit einem Drucklufterzeuger 12 und Druckluftspeicher 13 mit einem Druckminderventil 11a, über Ventile 21 ist die Druckluft über eine Leitung 16 zuführbar und steht für einen Hochlauf zur Verfügung.

Zum Zuführen der Druckmedien ist eine entsprechende Luft-/Dampfkammer 18 ausgebildet, aus der über Durchtrittsschlitze 19 im Steuerschieber 6 eine Verbindung zum inneren Zuführkanal 27 im Abgaszuführgehäuse 2 erfolgt.

**Patentansprüche**

**1.**   Hochlaufeinrichtung für einen Abgasturbolader eines Dieselmotors, mit einer Laderturbine und einem vorgeschalteten rohrförmigen Steuerschieber, wobei ein Gaszuführungsgehäuse der Laderturbine in einen inneren Gaszuführkanal und einen äußeren Gaszuführkanal getrennt ist, die von dem Steuerschieber gasdicht trennbar ist, dadurch gekennzeichnet, daß in den inneren Gaszuführungskanal (27) ein Druckmedium in Form von Dampf und/oder Druckluft aus einer zugeordneten Versorgungseinrichtung (9, 10, 12, 13) zum Hochlauf der Laderturbine (4) zuführbar ist.

2. Hochlaufeinrichtung nach Anspruch 1, dadurch gekennzeichnet, daß der Abgasturbolader (2) über eine Leitung (23) und einen Konverteranschluß (15) mit einem Dampfnetz als Versorgungseinrichtung verbindbar ist, wobei als Dampferzeuger ein Abgaskessel (9) oder ein Hilfskessel (10) angeordnet ist.

3. Hochlaufeinrichtung nach Anspruch 1, dadurch gekennzeichnet, daß der Abgasturbolader (2) über Leitungen (20, 27) und einen Konverteranschluß (16) mit einem Druckluftsystem (12, 13) als Versorgungseinrichtung verbindbar ist.

4. Hochlaufeinrichtung nach einem der Ansprüche 1 bis 3, dadurch gekennzeichnet, daß der Steuerschieber (6) über einen Antrieb (17) verstellbar ist und in der Schließstellung des Steuerschiebers (6) eine Luft-/Dampfkammer (18) über zugeordnete Durchtrittsschlitze (19) mit dem inneren Gaszuführkanal (27) verbindbar sind.

FIG. 1

FIG.2

FIG.3